# EUROPÄISCHE PATENTSCHRIFT

(11) **EP 3 221 598 B1**
(45) Veröffentlichungstag und Bekanntmachung des Hinweises auf die Patenterteilung: **07.08.2019**
(21) Anmeldenummer: 16741850.8
(22) Anmeldetag: 03.06.2016
(51) Int. Cl.: F16B 5/02

(54) **VERFORMBARER KÖRPER SOWIE SYSTEM UMFASSEND EINEN VERFORMBAREN KÖRPER UND EINEN ANTI-KRIECH-RING**
DEFORMABLE BODY, AND SYSTEM COMPRISING A DEFORMABLE BODY AND AN ANTI-CREEPAGE RING
CORPS DÉFORMABLE ET SYSTÈME COMPRENANT UN CORPS DÉFORMABLE ET UNE BAGUE ANTI-FLUAGE

(30) Priorität: 03.06.2015 DE 102015210308
(43) Veröffentlichungstag der Anmeldung: 27.09.2017
(73) Patentinhaber: A. Raymond et Cie, 38000 Grenoble (FR)
(72) Erfinder: HAUSER, Ingo, 79400 Kandern (DE); RHEIN, Axel, 79585 Steinen (DE); MEOLA, Davide, 79664 Wehr (DE)
(74) Vertreter: König Szynka Tilmann von Renesse Patentanwälte Partnerschaft mbB
(86) Internationale Anmeldenummer: PCT/EP2016/000913
(87) Internationale Veröffentlichungsnummer: WO 2016/192856

(56) Entgegenhaltungen:
- DE-A1- 3 000 697
- DE-A1-102005 045 630

## Beschreibung

Die Erfindung betrifft einen verformbaren Körper mit einem Loch, welches geeignet ist, einen Anti-Kriech-Ring und einen Befestiger aufzunehmen, wobei das Loch eine Mittelachse hat und das Loch durch das verformbare Material, das den verformbaren Körper formt, begrenzt ist. Ferner betrifft die Erfindung ein System mit einem verformbaren Körper und einem Anti-Kriech-Ring, wobei der Körper ein Loch aufweist, das den Anti-Kriech-Ring aufnimmt, wobei das Loch eine Mittelachse aufweist und sich durch den verformbaren Körper von einem den Anti-Kriech-Ring aufnehmenden Ende des verformbaren Körpers zu einem distalen Ende des verformbaren Körpers erstreckt, wobei das Loch durch das verformbare Material, das den verformbaren Körper formt, begrenzt ist.

Es ist bekannt, ein Trägerteil mittels einem Befestiger, der als Schraube ausgestaltet sein kann, zu halten, wobei auf der einen Seite des Trägerteils ein Gegenstück, beispielsweise in Form einer Mutter, angeordnet ist und auf der anderen Seite eine Unterlegscheibe oder ein sich in das Loch erstreckender Anti-Kriech-Ring (anti-creep ring) vorgesehen ist. Zwischen dem Trägerelement und dem Anti-Kriech-Ring kann ein ein Loch bildender verformbarer Körper vorgesehen sein.

Aus der DE 10 2005 045 630 A1 ist eine Anordnung zur Befestigung eines Kunststoffbauteils an einem Trägerteil bekannt. Das dort gezeigte Kunststoffbauteil weist eine Durchgangsbohrung auf. Das Kunststoffbauteil weist einen wulstartig ausgebildeten Steg 8 auf. In radialer Richtung angrenzend an den Steg 8 ist eine Vertiefung 9 vorgesehen. Bei dieser Ausführungsform ist der Steg nicht unter dem Schraubenkopf platziert, sondern vielmehr in der Trennfuge zwischen Kunststoffteil und Trägerteil. Dabei würde es als vorteilhaft für diese Ausgestaltung angesehen, dass die maximierte Auflagefläche zwischen Kunststoffteil und Schraubenkopf, bzw. Anschlagring verbleibt, was im Betrieb zu einer minimierten Flächenpressung unter dem Schraubenkopf, bzw. Anschlagring führt. Bei dieser Ausführungsform beschreibt die DE 10 2005 045 630 A1, dass sicherzustellen ist, dass das verpresste Material des Stegs in einen Freiraum entweichen kann. Dazu befindet sich vorteilhaft um den jeweiligen Steg herum eine Vertiefung, die in ihrer Größe den maximal zu verpressenden Volumen des Stegs entspricht. Dies kann nach der Lehre der DE 10 2005 045 630 A1 beispielsweise dadurch erreicht werden, dass der Steg wellenförmig ausgelegt wird, so dass entsprechend der vergrößerten Darstellung der Figur 7 der DE 10 2005 045 630 A1 die Querschnittsfläche A des wulstartig ausgebildeten Stegs 8 einer Querschnittsfläche A einer ringförmigen Vertiefung entspricht und so bei Verdrängung des Materials des Stegs 8 die Vertiefung 9 aufgefüllt wird.

DE 30 00 697 A1 zeigt eine Befestigungseinheit, durch die ein Plastikteil mit einem dünnen Blechteil verbunden wird. Die Befestigungseinheit besteht aus einem selbstschneidenden Befestigungselement und einem Distanzstück. Das Distanzstück umfasst einen sich axial erstreckenden Ring und der obere Umfang des Rings besitzt zumindest einen nach innen weisenden Vorsprung, der auch die Form eines Kreisrings besitzen kann. Das Distanzstück umfasst auch einen Materialergreifungsteil, der als sich seitlich erstreckender Flansch ausgebildet ist. Der Flansch kann eine Mehrzahl von Stützzähnen aufweisen. Diese Zähne ergreifen ein Kunststoffteil und dringen in es ein und verhindern so eine Relativbewegung zwischen dem Kunststoffteil und dem Distanzstück. Die axiale Länge des Rings ist ungefähr gleich der Dicke des Kunststoffteils. Der Ring ist in ein vergrößertes Loch in dem Kunststoffteil eingesetzt und das Ende des Rings stößt gegen eine Blechunterlage. Dies erlaubt, dass der Materialergreifungsteil das Kunststoffteil leicht zusammenklemmt, wenn ein mit Gewinde versehener Schaft des Befestigungselements schneidet und in der Bohrung in der Unterlage voranschreitet, wobei ein großer, unerwünschter Kaltfließbetrag vermieden wird.

Es hat sich herausgestellt, dass an die tatsächliche Klemmkraft, die insbesondere durch die Schraube aufgebracht werden kann, erhöhte Anforderungen gestellt werden. Daher ist es wünschenswert, die Klemmkraft zu verbessern.

Aufgabe der Erfindung ist es daher, die Klemmkraft zum Klemmen eines Elements zu verbessern.

Die Aufgabe wird durch den Gegenstand der nebengeordneten Ansprüche gelöst. Vorteilhafte Ausführungsformen sind in den Unteransprüchen und der nachfolgenden Beschreibung angegeben.

Die Erfindung geht von dem Grundgedanken aus, eine spezielle Geometrie eines verformbaren Körpers vorzusehen, mit der die tatsächliche Klemmkraft verbessert werden kann. Der verformbare Körper kann dabei zwischen einem Trägerteil und dem Anti-Kriech-Ring angeordnet sein und weist eine Auflage für den Anti-Kriech-Ring auf, die beim anfänglichen Befestigen des Befestigers am Trägerelement deformiert werden kann. Die deformierbare Auflage kann dabei auf einen vom verformbaren Körper gebildeten Vorsprung in Richtung der Verbindungsachse bzw. Längsachse des Befestigers verformt werden und nach der Verformung auf dem vom verformbaren Körper gebildeten Vorsprung aufliegen.

Hierdurch wird es ermöglicht, das Kriechverhalten im befestigten Zustand zu verringern. Die räumliche Geometrie, mit der der erfindungsgemäße Effekt erzielbar ist, erfordert lediglich eine geringe Veränderung eines verformbaren Körpers, was sich sowohl positiv auf die Herstellung als auch auf die damit verbundenen Kosten auswirkt. Ferner wird die Langzeitstabilität verbessert. Mittels der vorgesehenen Geometrie kann eine vorbestimmte Klemmkraft für eine lange Zeit erhalten bleiben.

Die Erfindung schafft einen verformbaren Körper mit einem Loch, das geeignet ist, einen Anti-Kriech-Ring und einen Befestiger aufzunehmen, wobei das Loch eine Mittelachse hat und das Loch durch das verformbare Material, das den verformbaren Körper formt, begrenzt ist. Der verformbare Körper weist einen deformierbaren, vorstehenden Kranz auf, der das Loch umgibt und in Richtung der Mittelachse vorsteht. Ferner weist der verformbare Körper einen Vorsprung auf, der das Loch umgibt und von dem vorstehenden Kranz in einer Richtung senkrecht zur Mittelachse beabstandet ist. Der Kranz überragt in Richtung der Mittelachse den Vorsprung. Der Kranz weist zumindest lokal im Bereich des am Vorsprung ausgebildeten Kranzes mit seiner oberen Begrenzung ein höheres Niveau auf als der Vorsprung mit seiner oberen Begrenzung.

Der Begriff "Befestiger" im Sinne der Erfindung umfasst Befestiger, mit denen insbesondere Vorspannkräfte erzeugbar oder aufbringbar sind, die größer als ungefähr 1000 N sind. Bei einem Befestiger, der eine Schraube und gegebenenfalls eine Mutter umfasst, kann dieser insbesondere metrisch ausgestaltet sein. Es sind aber auch andere Schraubenarten möglich. Schraubengrößen im Bereich von M5 bis M8 können insbesondere vorgesehen sein; es sind auch kleinere, insbesondere M4, und größere, insbesondere M10 bis M12, möglich.

Der Begriff "Anti-Kriech-Ring" im Sinne der Erfindung umfasst auch eine Unterlegscheibe. An der Unterlegscheibe können Elemente angeformt sein, die beispielsweise die Reibung mit einem an der Unterlegscheibe anliegenden Element, insbesondere dem verformbaren Körper, erhöhen können. Am Anti-Kriech-Ring angeformte Elemente können der Verrastung bei der Vormontage und zur Verdrehsicherung dienen.

Der Begriff "verformbar" im Sinne der Erfindung umfasst ein Verformen des Materials bei einer Krafteinwirkung, die typischerweise auf dem Gebiet der Erfindung, insbesondere beim Anziehen einer Schraube, ist. Die Verformung kann eine plastische Verformung sein; eine elastische Verformung oder eine Mischform kann alternativ vorgesehen sein. Die hier auftretenden Kräfteniveaus beim Befestigen des Befestigers liegen, insbesondere für Schrauben M5, M6, M8, im Bereich von ungefähr 2.000 N bis ungefähr 20.000 N. Bei größeren Schrauben M10 bzw. M12 sind höhere Kräfte bis 35 kN bzw. 50 kN möglich. Typischerweise wird als Material für den verformbaren Körper PA, PP oder POM verwendet oder weist dieses auf. Ein Glasfaser-Zusatz ist bei den Materialien möglich. Ein verformbarer Körper im Sinne der Erfindung weist vorzugsweise einen Elastizitätsmodul im Bereich von ungefähr 1.000 MPa bis ungefähr 9.000 MPa auf.

Der Begriff "Kranz" im Sinne der Erfindung umfasst eine ringförmige Zusammenfügung von Erhebungen, die insbesondere kreisförmig oder ellipsenförmig ausgebildet sein kann. Die ringförmige Zusammenfügung kann auch als geschlossenes Linienelement, welches insbesondere symmetrisch ausgestaltet um die Mittelachse des Loches ist, ausgebildet sein. Verallgemeinerte Polygone sind möglich. Die ringförmige Zusammenfügung weist im Wesentlichen dieselbe Höhe entlang der Erhebung(en) auf.

Der deformierbare, vorstehende Kranz, der das Loch umgibt und in Richtung der Mittelachse vorsteht, weist insbesondere die Eignung auf, zunächst bei Krafteinwirkung durch den Befestiger umgeformt zu werden. Der Kranz nimmt zunächst einen Teil der Befestigungskraft, die aufgebracht wird, auf. Beispielsweise kann der Kranz eine Befestigungskraft, insbesondere eine Schraubkraft bei einem als Schraube ausgestalteten Befestiger, zunächst aufnehmen, insbesondere bis der Anti-Kriech-Ring und das Trägerelement sich berühren. Dabei wird erfindungsgemäß ausgenutzt, dass mit dem vorgesehenen Kranz weniger Kraft absorbiert wird als beispielsweise mit einem großflächig ausgebildeten Element, wodurch eine wesentliche Verringerung des plastischen Kriechens über den Lebenszyklus bewirkt werden kann. Das Verhältnis Oberfläche Kranz zu Tellerfläche Anti-Kriech-Ring kann insbesondere im Bereich von ungefähr 5 % bis 20 %, bevorzugt von ungefähr 5 % bis ungefähr 15 %, ganz besonders bevorzugt von ungefähr 7 % bis ungefähr 13 % liegen. In einer bevorzugten Ausführungsform ist das Verhältnis ungefähr 10 %.

Der Vorsprung, der das Loch umgibt, kann in einem Bereich, in dem der Anti-Kriech-Ring nicht in Anlage mit dem verformbaren Körper gelangt, den Kranz überragen, so dass der verformbare Körper bezogen auf den Anti-Kriech-Ring einen Abschnitt aufweisen kann, der den Kranz überragt. Dieser weitere Kranz hat dann keinen Einfluss auf die Funktionalität des deformierbaren, vorstehenden Kranzes, da dieser weitere Kranz außerhalb des in Anlage mit dem verformbaren Körper kommenden Anti-Kriech-Rings angeordnet ist.

Eine Vertiefung ist zwischen dem Kranz und dem Vorsprung vorgesehen, so dass zumindest ein Teil des Kranz in die Vertiefung hinein oder auf die Vertiefung zu oder in eine Position deformiert werden kann, in der er über der Vertiefung schwebt. Bei dem erfindungsgemäßen Körper ist die Vertiefung derart ausgeführt, dass zumindest die Spitze des Kranzes in die Vertiefung hinein oder auf die Vertiefung zu oder in eine Position deformiert werden kann, in der sie über der Vertiefung schwebt. Bei dem erfindungsgemäßen System ist die Vertiefung vorzugsweise derart ausgeführt, dass zumindest die Spitze des Kranzes in die Vertiefung hinein oder auf die Vertiefung zu oder in eine Position deformiert werden kann, in der sie über der Vertiefung schwebt. Beispielsweise kann ein Teil des Kranzes, vorzugsweise die Spitze des Kranzes, so ausgeführt werden, dass sie sich in die Vertiefung hinein oder auf die Vertiefung zu oder in eine Position kringelt in der er über der Vertiefung schwebt. Der Kranz kann in einen vorbestimmten Bereich auf dem verformbaren Körper deformiert werden und zumindest teilweise in Anlage mit dem Vorsprung des verformbaren Körpers gelangen. Es kann ein Deformationsverhalten eingestellt werden, das im Wesentlichen vom Material des Kranzes und der geometrischen Form des Kranzes abhängig ist. In einer bevorzugten Ausführungsform umgibt die Vertiefung den Kranz. In einer bevorzugten Ausführungsform entspricht das Ausmaß der Vertiefung in zumindest eine der möglichen Richtungen radial zur Längsachse des Lochs mehr als dem 0,5fachen, besonders bevorzugt mehr als dem 0,75fachen, ist bevorzugt gleich und besonders bevorzugt entspricht sie mehr als dem 1,25fachen der Dicke des Kranzes in diese Richtung. In einer bevorzugten Ausführungsform entspricht das Ausmaß der Vertiefung in allen möglichen Richtungen radial zur Längsachse des Lochs mehr als dem 0,5fachen, besonders bevorzugt mehr als dem 0,75fachen, ist bevorzugt gleich und besonders bevorzugt entspricht sie mehr als dem 1,25fachen der Dicke des Kranzes in diesen Richtungen.

In einer bevorzugten Ausführungsform weist der Kranz einen sich verjüngenden Querschnitt in der Ebene, die die Mittelachse enthält, auf. Mittels des sich verjüngenden Querschnitts kann eine Deformation des Kranzes derart eingestellt werden, dass die Kraft dann zum Deformieren des Kranzes ansteigt.

In einer bevorzugten Ausführungsform weist der Kranz einen asymmetrischen Querschnitt in der Ebene, die die Mittelachse enthält, auf, wodurch eingestellt werden kann, in welche Richtung der Kranz deformiert wird. Beispielsweise kann durch den asymmetrischen Querschnitt bevorzugt dafür Sorge getragen werden, dass der Kranz sich in die Vertiefung, die zwischen dem Kranz und dem Vorsprung vorgesehen sein kann, verformt.

In einer bevorzugten Ausführungsform bildet der Vorsprung einen Teil eines weiteren Kranzes, der vorzugsweise beabstandet zum Anti-Kriech-Ring ausgebildet ist und diesen umgibt. Hierdurch kann ein Schraubenkopf des als Schraube ausgestalteten Befestigers von dem weiteren Kranz umgeben sein.

Vorzugsweise sind der Kranz und der Vorsprung integral mit dem Körper ausgebildet. Der verformbare Körper kann mit dem Kranz und dem Vorsprung einstückig ausgebildet sein. Die Handhabung und/oder die Herstellung können vereinfacht sein.

Vorzugsweise ist der Vorsprung von der Mittelachse weiter beabstandet als der Kranz, so dass der Kranz näher am Loch angeordnet ist.

In einer bevorzugten Ausführungsform weist das Loch einen kreisförmigen Querschnitt in einer Ebene senkrecht zur Mittelachse auf, so dass eine Rotationssymmetrie des Loches vorliegt, welches das Einführen eines Befestigers, der eine entsprechend angepasste Form aufweist, vereinfachen kann.

Vorzugsweise sind der Kranz und/oder der Vorsprung kreisförmige Elemente, deren Mittelachsen mit der Mittelachse des Körpers zusammenfallen, so dass die Symmetrie des Loches in der Symmetrie des Kranzes und/oder des Vorsprungs wiedergespiegelt ist. Ferner kann mittels kreisförmiger Elemente eine Symmetrie der auftretenden Kräfte erreicht werden.

In einer bevorzugten Ausführungsform weist der Kranz eine Endfläche auf, die das Loch umgibt und in einer Ebene senkrecht zur Mittelachse angeordnet ist, und/oder der Vorsprung umfasst eine Oberfläche, die das Loch umgibt und in einer Ebene senkrecht zur Mittelachse angeordnet ist. Hierdurch kann ein vorbestimmter Ausgangszustand erreichbar sein, mit dem der Beginn des Aufbringens der Befestigungskraft definiert werden kann.

Die Erfindung schafft ferner ein System mit einem verformbaren Körper und einem Anti-Kriech-Ring, wobei der Körper ein Loch aufweist, das den Anti-Kriech-Ring aufnimmt, wobei das Loch eine Mittelachse aufweist und sich durch den verformbaren Körper von einem den Anti-Kriech-Ring aufnehmenden Ende des verformbaren Körpers zu einem distalen Ende des verformbaren Körpers erstreckt, wobei das Loch durch das verformbare Material, das den verformbaren Körper formt, begrenzt ist. Das verformbare Material, das das Loch des verformbaren Körpers umgibt, ist in dem Bereich des den Anti-Kriech-Ring aufnehmenden Endes des verformbaren Körpers elastischer, weicher bzw. eher verformbar als das Material an einigen Stellen des Anti-Kriech-Rings. Hierdurch kann erreicht werden, dass das Material des verformbaren Körpers zumindest in dem genannten Bereich sich eher verformt als das Material des Anti-Kriech-Rings, so dass bei Einwirken einer anfänglichen Befestigungskraft zunächst ein Verformen des verformbaren Körpers beginnt.

Der Anti-Kriech-Ring kann insbesondere einen rohrförmigen Teil aufweisen, der durch das Loch aufgenommen wird. Der Anti-Kriech-Ring umfasst einen Fortsatz (einen Vorsprung), der sich von dem rohrförmigen Teil in einer radialen Richtung erstreckt, wobei der Fortsatz einstückig mit dem rohrförmigen Teil aus einem Material, welches eine bogenförmige Form als Übergang von dem rohrförmigen Teil zum Fortsatz bildet, ausgestaltet ist, wobei das biegbare Material des Anti-Kriech-Rings in Reaktion auf eine Kraft, die in der Richtung der Mittelachse wirkt, steifer ist als das Material des verformbaren Körpers, welches das Loch des verformbaren Körpers in dem Bereich des den Anti-Kriech-Ring aufnehmenden Endes des verformbaren Körpers umgibt, in Reaktion auf eine Kraft, die in der Richtung der Mittelachse wirkt.

Ferner schafft die Erfindung ein System mit einem verformbaren Körper und einem Anti-Kriech-Ring.

In einer bevorzugten Ausführungsform weist der Anti-Kriech-Ring einen Fortsatz auf, der sich von dem Kranz in Richtung auf den Vorsprung erstreckt, so dass der Anti-Kriech-Ring mittels des Fortsatzes beim Befestigen des Befestigers zumindest teilweise in Anlage mit dem verformbaren Körper gelangt. In einer bevorzugten Ausführungsform erstreckt sich der Fortsatz des Anti-Kriech-Rings von dem Kranz bis zum Vorsprung des verformbaren Körpers, der den Kranz umgibt. In einer bevorzugten Ausführungsform befindet sich der Kranz des verformbaren Körpers in Kontakt mit dem Fortsatz des Anti-Kriech-Rings.

In einer bevorzugten Ausführungsform weist der Anti-Kriech-Ring einen rohrförmigen Teil auf, der von dem Loch aufgenommen ist, wobei der Fortsatz sich von dem rohrförmigen Teil erstreckt. Der rohrförmige Teil, der sich durch das Loch entlang der Mittelachse des Loches erstrecken kann, kann beim Befestigen, insbesondere Festschrauben der Schraube, in Kontakt mit einem Trägerteil gebracht werden.

In einer bevorzugten Ausführungsform ist der Anti-Kriech-Ring aus einem Metall geformt, wodurch der Anti-Kriech-Ring stabil ist und hohe Kräfte ausgeübt werden können.

In einer bevorzugten Ausführungsform weist das System einen Befestiger auf, der sich durch den Anti-Kriech-Ring und das Loch erstreckt. Insbesondere kann der Befestiger als Schraube ausgestaltet sein.

In einer bevorzugten Ausführungsform weist das System ein Trägerelement auf, welches ein Loch aufweist, wobei der verformbare Körper auf dem Trägerelement angeordnet ist und der Befestiger sich durch den Anti-Kriech-Ring, das Loch in dem verformbaren Körper und das Loch in dem Trägerelement erstreckt und an dem Trägerelement mittels Verschrauben des Befestigers in ein Gewinde, welches mittels des Lochs des Trägerelements bereitgestellt wird oder in ein Gewinde einer Mutter, die an dem distalen Ende des Trägerelements angeordnet ist, verschraubt wird. Das Ende des rohrförmigen Teils des Anti-Kriech-Rings, welches dem Trägerelement zugewandt ist, ist innerhalb des Lochs des verformbaren Körpers angeordnet und weist einen Abstand zum Trägerelement in einem ersten Anordnungszustand des Systems auf, wenn der Befestiger nicht oder nur geringfügig in das Gewinde geschraubt ist. Das Ende des rohrförmigen Teils des Anti-Kriech-Rings, welches dem Trägerelement zugewandt ist, ist in Kontakt mit dem Trägerelement in einem zweiten Anordnungszustand des Systems, wenn der Befestiger weiter in das Gewinde geschraubt ist und das verformbare Material, das das Loch des verformbaren Körpers in dem Bereich des Anti-Kriech-Rings aufnehmenden Endes des verformbaren Körpers umgibt, zusammengedrückt wurde.

In einer bevorzugten Ausführungsform kontaktiert der Fortsatz des Anti-Kriech-Rings den Vorsprung in dem zweiten Anordnungszustand nicht. Der Fortsatz des Anti-Kriech-Rings ist in Kontakt mit dem verformten Kranz, und der verformte Kranz bildet eine Erhebung auf dem Vorsprung.

Die Erfindung wird nachfolgend anhand von Zeichnungen, die Ausführungsformen der Erfindung zeigen, näher erläutert. Darin zeigt:
- Fig. 1: eine Schnittdarstellung eines Systems im befestigten Zustand in einer ersten Ausführungsform;
- Fig. 2: eine Schnittdarstellung eines Systems im befestigten Zustand in einer zweiten Ausführungsform; und
- Fig. 3: eine vergrößerte Darstellung eines Anti-Kriechrings und eines verformbaren Körpers vor einer Befestigung durch einen Befestiger.

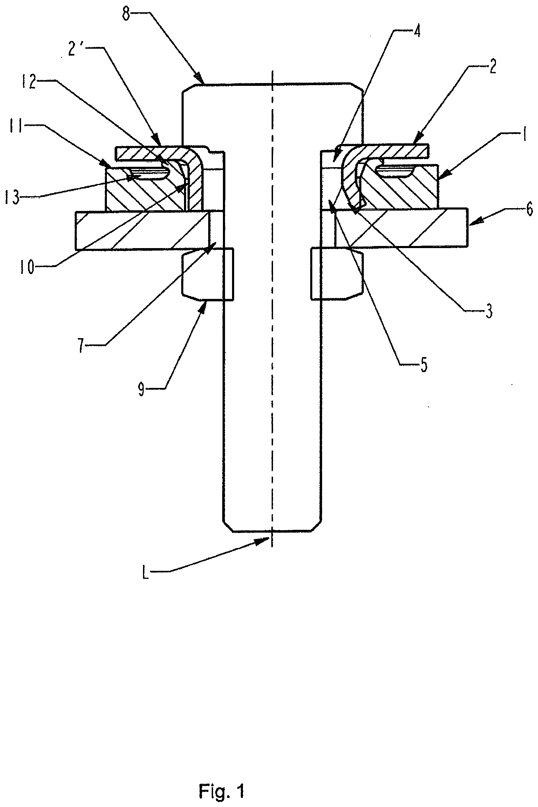

Fig. 1 zeigt ein System mit einem verformbaren Körper 1 und einem Anti-Kriech-Ring 2, wobei der Körper 1 ein Loch 3 aufweist, das den Anti-Kriech-Ring 2 aufnimmt, wobei das Loch 3 eine Mittelachse L aufweist und sich durch den verformbaren Körper 1 von einem den Anti-Kriech-Ring 2 aufnehmenden Ende 4 des verformbaren Körpers 1 zu einem distalen Ende 5 des verformbaren Körpers 1 erstreckt, wobei das Loch 3 durch das verformbare Material, das den verformbaren Körper 1 formt, begrenzt ist.

Fig. 1 zeigt ferner ein Trägerelement 6, welches ein Loch 7 aufweist. Der verformbare Körper 1 ist auf dem Trägerelement 6 angeordnet und ein Befestiger 8 erstreckt sich durch den Anti-Kriech-Ring 2, das Loch 3 in dem verformbaren Körper 1 und das Loch 7 in dem Trägerelement 6. Der als Schraube ausgestaltete Befestiger 8 ist mittels Verschrauben mit einer am distalen Ende des Trägerelements 6 vorgesehenen Mutter 9 verschraubt.

Die Fig. 1 zeigt einen Anordnungszustand des Systems, bei dem das Ende eines rohrförmigen Teils 10 des Anti-Kriech-Ringes 2, welches dem Trägerelement 6 zugewandt ist, in Kontakt mit dem Trägerelement 6 ist. Der Fortsatz 2', der sich radial nach außen vom rohrförmigen Teil 10 des Anti-Kriech-Ringes 2 erstreckt, ist in Kontakt mit dem Kranz 12 des verformbaren Körpers 1. Der Befestiger 8 ist so weit in das Gewinde der Mutter 9 geschraubt, dass das verformbare Material, das das Loch 3 des verformbaren Körpers 1 in dem Bereich des Anti-Kriech-Ringes 2 aufnehmenden Endes des verformbaren Körpers 1 umgibt, zusammengedrückt wurde. Insbesondere wurde der Kranz 12 des verformbaren Körper 1 verformt beim Verschrauben des Befestigers 8. Der Kranz 12 wurde in Richtung einer am verformbaren Körper 1 ausgebildeten Vertiefung 13 verformt und schwebt in der in Fig. 1 gezeigten Ausführungsform über der Vertiefung. Es ist von Fig. 1 leicht ersichtlich, dass mit leichten Änderungen der Geometrie des Kranzes 12 (beispielsweise indem der Kranz schmaler und somit elastischer gemacht wird) und/oder leichten Änderungen des für den Kranz 12 verwendeten Materials eine Ausführungsform geschaffen werden kann, bei der die Spitze des Kranzes 12 sich in die Vertiefung 13 eindreht.

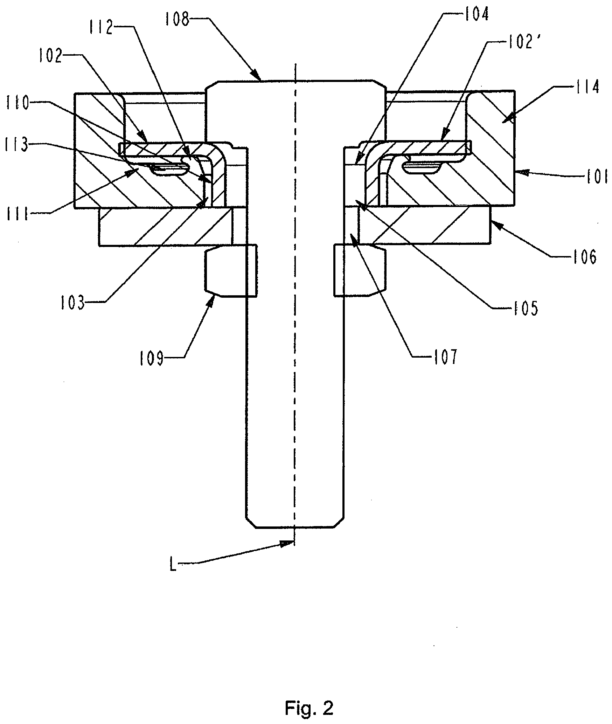

Die Fig. 2 zeigt eine weitere Ausführungsform des Systems. Bei der weiteren Ausführungsform werden Elemente, die in ihrer Funktion Elementen aus der in der Fig. 1 dargestellten Ausführungsform gleichen, mit gleichen Bezugszeichen, die um den Wert 100 erhöht sind, gekennzeichnet. Im Folgenden wird die zweite Ausführungsform im Wesentlichen bezüglich ihrer Unterschiede zur ersten Ausführungsform beschrieben.

Bei der zweiten Ausführungsform ist am Vorsprung 111 ein weiterer Kranz 114 ausgebildet, der den Anti-Kriech-Ring 102 umgibt.

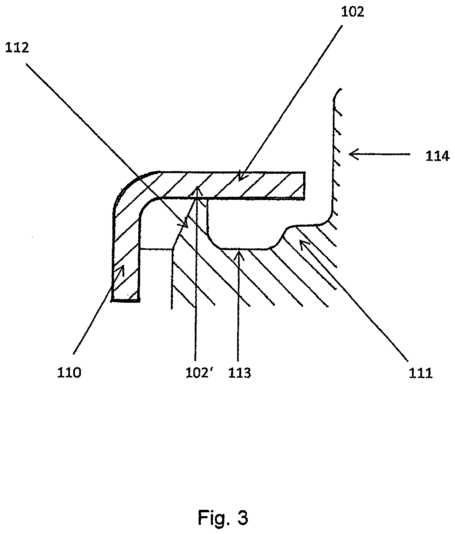

Fig. 3 zeigt eine vergrößerte Darstellung eines Anti-Kriechrings 102 und eines verformbaren Körpers 101 vor einer Befestigung durch einen Befestiger 108 gemäß der zweiten Ausführungsform.

Der Kranz 112 weist einen sich verjüngenden Querschnitt in der Ebene, die die Mittelachse L enthält, auf. Der Kranz 112 ist ferner derart ausgeformt, dass er einen asymmetrischen Querschnitt in der Ebene, die die Mittelachse L enthält, aufweist. Beide Maßnahmen statten den Kranz 112 dafür aus, sich in Richtung auf die Vertiefung 113 zu einzudrehen, wenn eine Längskraft appliziert wird, die entlang der Längsachse des Anti-Kriech-Rings 102 wirkt.

## Patentansprüche

1. Verformbarer Körper (1; 101) mit einem Loch (3; 103), das geeignet ist, einen Anti-Kriech-Ring (2; 102) und einen Befestiger (8; 108) aufzunehmen, wobei das Loch (3; 103) eine Mittelachse (L) hat und das Loch (L) durch das verformbare Material, das den verformbaren Körper (1; 101) formt, begrenzt ist, mit
- einem deformierbaren, vorstehenden Kranz (12; 112), der das Loch (3; 103) umgibt und in Richtung der Mittelachse (L) vorsteht,
- einem Vorsprung (11; 111), der das Loch (3; 103) umgibt und von dem vorstehenden Kranz (12; 112) in einer Richtung senkrecht zur Mittelachse (L) beabstandet ist, wobei der Kranz (12; 112) in Richtung der Mittelachse (L) den Vorsprung (11; 111) überragt,
**dadurch gekennzeichnet, dass** eine Vertiefung (13; 113) zwischen dem Kranz (12; 112) und dem Vorsprung (11; 111) vorgesehen ist, so dass zumindest die Spitze des Kranzes (12; 112) in die Vertiefung (13,113) hinein oder auf die Vertiefung (13,113) zu oder in eine Position deformiert werden kann, in der sie über der Vertiefung (13,113) schwebt.

2. Körper (1; 101) nach Anspruch 1, **dadurch gekennzeichnet, dass** der Kranz (12; 112) einen sich verjüngenden Querschnitt in der Ebene, die die Mittelachse (L) enthält, aufweist.

3. Körper (1; 101) nach einem der Ansprüche 1 oder 2, **dadurch gekennzeichnet, dass** der Kranz (12; 112) einen asymmetrischen Querschnitt in der Ebene, die die Mittelachse (L) enthält, aufweist.

4. Körper (1; 101) nach einem der Ansprüche 1 bis 3, **dadurch gekennzeichnet, dass** der Vorsprung (11; 111) einen weiteren Kranz (14; 114) bildet.

5. Körper (1; 101) nach einem der Ansprüche 1 bis 4, **dadurch gekennzeichnet, dass** der Kranz (12; 112) und der Vorsprung (11; 111) integral mit dem Körper (1; 101) ausgebildet sind.

6. Körper (1; 101) nach einem der Ansprüche 1 bis 5, **dadurch gekennzeichnet, dass** der Vorsprung (11; 111) von der Mittelachse (L) weiter beabstandet ist als der Kranz (12; 112).

7. Körper (1; 101) nach einem der Ansprüche 1 bis 6, **dadurch gekennzeichnet, dass** das Loch (3; 103) einen kreisförmigen Querschnitt in einer Ebene senkrecht zur Mittelachse (L) aufweist.

8. Körper (1; 101) nach einem der Ansprüche 1 bis 7, **dadurch gekennzeichnet, dass** der Kranz (12; 112) und/oder der Vorsprung (11; 111) kreisförmige Elemente sind, deren Mittelachsen mit der Mittelachse (L) des Körpers zusammenfallen.

9. Körper (1; 101) nach einem der Ansprüche 1 bis 8, **dadurch gekennzeichnet, dass** der Kranz (12; 112) eine Endfläche aufweist, die das Loch (3; 103) umgibt und in einer Ebene senkrecht zur Mittelachse (L) angeordnet ist und/oder, dass der Vorsprung (11; 111) eine Oberfläche umfasst, die das Loch (3; 103) umgibt und in einer Ebene senkrecht zur Mittelachse (L) angeordnet ist.

10. System mit einem verformbaren Körper (1; 101) mit einem Loch (3; 103), das geeignet ist, einen Anti-Kriech-Ring (2; 102) und einen Befestiger (8; 108) aufzunehmen, wobei das Loch (3; 103) eine Mittelachse (L) hat und das Loch (L) durch das verformbare Material, das den verformbaren Körper (1; 101) formt, begrenzt ist, mit
- einem deformierbaren, vorstehenden Kranz (12; 112), der das Loch (3; 103) umgibt und in Richtung der Mittelachse (L) vorsteht,
- einem Vorsprung (11; 111), der das Loch (3; 103) umgibt und von dem vorstehenden Kranz (12; 112) in einer Richtung senkrecht zur Mittelachse (L) beabstandet ist, wobei der Kranz (12; 112) in Richtung der Mittelachse (L) den Vorsprung (11; 111) überragt
und einem Anti-Kriech-Ring (2, 102),
wobei der Anti-Kriech-Ring (2; 102) einen Fortsatz (2'; 102') aufweist, der sich von dem Kranz (12; 112) in Richtung auf den Vorsprung (11; 111) erstreckt und der Anti-Kriech-Ring (2; 102) einen rohrförmigen Teil (10; 110) aufweist, der von dem Loch (3; 103) aufgenommen ist, wobei der Fortsatz (2'; 102') sich von dem rohrförmigen Teil (10; 110) erstreckt,
**dadurch gekennzeichnet, dass** der Kranz (12; 112) in Kontakt mit dem Fortsatz (2'; 102') steht und eine Vertiefung (13; 113) zwischen dem Kranz (12; 112) und dem Vorsprung (11; 111) vorgesehen ist, so dass zumindest ein Teil des Kranzes (12; 112) in die Vertiefung (13,113) hinein oder auf die Vertiefung (13,113) zu oder in eine Position deformiert werden kann, in der er über der Vertiefung (13,113) schwebt.

11. System nach Anspruch 10, **dadurch gekennzeichnet, dass** sich das Loch (3; 103) sich durch den verformbaren Körper (1; 101) von einem den Anti-Kriech-Ring (2; 102) aufnehmenden Ende des verformbaren Körpers (1; 101) zu einem distalen Ende des verformbaren Körpers (1; 101) erstreckt,
wobei das verformbare Material, das das Loch (3; 103) des verformbaren Körpers (1; 101) in dem Bereich des den Anti-Kriech-Ring (2; 102) aufnehmenden Endes des verformbaren Körpers (1; 101) umgibt, weicher ist als das Material an einigen Stellen des Anti-Kriech-Rings (2; 102),
wobei der Fortsatz (2'; 102')sich von dem rohrförmigen Teil (10; 110) in einer radialen Richtung erstreckt, wobei der Fortsatz (2'; 102') einstückig mit dem rohrförmigen Teil (10; 110) aus einem Material, welches eine bogenförmige Form als Übergang von dem rohrförmigen Teil (10; 110) zum Fortsatz (2'; 102') bildet, ausgestaltet ist, wobei das biegbare Material des Anti-Kriech-Rings (2; 102) in Reaktion auf eine Kraft, die in der Richtung der Mittelachse (L) wirkt, steifer ist als das Material des verformbaren Körpers (1; 101), welches das Loch (3; 103) des verformbaren Körpers (1; 101) in dem Bereich des den Anti-Kriech-Ring (2; 102) aufnehmenden Endes des verformbaren Körpers (1; 101) umgibt, in Reaktion auf eine Kraft, die in der Richtung der Mittelachse (L) wirkt.

12. System nach Anspruch 10, wobei der verformbare Körper ferner **dadurch gekennzeichnet ist, dass** eine Vertiefung (13; 113) zwischen dem Kranz (12; 112) und dem Vorsprung (11; 111) vorgesehen ist, so dass zumindest ein Teil des Kranzes (12; 112) in die Vertiefung (13,113) hinein oder auf die Vertiefung (13,113) zu oder in eine Position deformiert werden kann, in der er über der Vertiefung (13,113) schwebt
oder dass der verformbare Körper ein Körper nach einem der Ansprüche 1 bis 9 ist.

13. System nach einem der Ansprüche 10 bis 12, **dadurch gekennzeichnet, dass** der Anti-Kriech-Ring (2; 102) aus einem Metall geformt ist.

14. System nach einem der Ansprüche 10 bis 13, **gekennzeichnet durch** einen Befestiger (8; 108), der sich **durch** den Anti-Kriech-Ring (2; 102) und das Loch (3; 103) erstreckt.

15. System nach Anspruch 14, sofern abhängig von Anspruch 10, **gekennzeichnet durch**
- ein Trägerelement (6; 106), welches ein Loch (7; 107) aufweist, wobei der verformbare Körper (1; 101) auf dem Trägerelement (6; 106) angeordnet ist und der Befestiger (8; 108) sich **durch** den Anti-Kriech-Ring (2; 102), das Loch (3; 103) in dem verformbaren Körper (1; 101) und das Loch (7; 107) in dem Trägerelement (6; 106) erstreckt und an dem Trägerelement (6; 106) mittels Verschrauben des Befestigers (8; 108) in ein Gewinde, welches mittels des Lochs (7; 107) des Trägerelements (6; 106) bereitgestellt wird oder in ein Gewinde einer Mutter (9; 109), die an dem distalen Ende des Trägerelements (6; 106) angeordnet ist, verschraubt wird,
und wobei
- das Ende des rohrförmigen Teils (10; 110) des Anti-Kriech-Rings (2; 102), welches dem Trägerelement (6; 106) zugewandt ist, innerhalb des Lochs (3; 103) des verformbaren Körpers (1; 101) angeordnet ist und einen Abstand zum Trägerelement (6; 106) in einem ersten Anordnungszustand des Systems aufweist, wenn der Befestiger (8; 108) nicht oder nur geringfügig in das Gewinde geschraubt ist,
und wobei
- das Ende des rohrförmigen Teils (10; 110) des Anti-Kriech-Rings (2; 102), welches dem Trägerelement (6; 106) zugewandt ist, in Kontakt mit dem Trägerelement (6; 106) in einem zweiten Anordnungszustand des Systems ist, wenn der Befestiger (8; 108) weiter in das Gewinde geschraubt ist und das verformbare Material, das das Loch (3; 103) des verformbaren Körpers (1; 101) in dem Bereich des Anti-Kriech-Rings (2; 102) aufnehmenden Endes der verformbaren Körpers (1; 101) umgibt, zusammengedrückt wurde.

16. System nach Anspruch 15, **dadurch gekennzeichnet, dass** der Fortsatz (2'; 102') des Anti-Kriech-Rings (2; 102) den Vorsprung (11; 111) in dem zweiten Anordnungszustand nicht kontaktiert.

## Claims

1. Deformable body (1; 101) with a hole (3; 103) that is suitable for receiving anti-creep ring (2; 102) and a fitting (8; 108), wherein the hole (3; 103) a has central axis (L) and the hole (L) is delimited by the deformable material that forms the deformable body (1; 101), with
- a deformable, protruding rim (12; 112), which surrounds the hole (3; 103) and protrudes in the direction of the central axis (L),
- a projection (11; 111) that surrounds the hole (3; 103) and is distanced from the protruding rim (12; 112) in a direction vertical to the central axis (L), wherein the rim (12; 112) protrudes over the projection (11; 111) in the direction of the central axis (L),
**characterised in that** a recess (13; 113) is envisaged between the rim (12; 112) and the projection (11; 111), so that at least the tip of the rim (12; 112) can be deformed into the recess (13,113) or onto the recess (13,113) or into a position in which it floats above the recess (13,113).

2. Body (1; 101) according to claim 1, **characterised in that** the rim (12; 112) has a tapering cross-section on the level that includes the central axis (L).

3. Body (1; 101) according to one of the claims 1 or 2, **characterised in that** the rim (12; 112) has an asymmetric cross-section on the level that includes the central axis (L).

4. Body (1; 101) according to one of the claims 1 to 3, **characterised in that** the projection (11; 111) forms a further rim (14; 114).

5. Body (1; 101) according to one of the claims 1 to 4, **characterised in that** the rim (12; 112) and the projection (11; 111) are integrally formed with the body (1; 101).

6. Body (1; 101) according to one of the claims 1 to 5, **characterised in that** the projection (11; 111) is distanced further from the central axis (L) than the rim (12; 112).

7. Body (1; 101) according to one of the claims 1 to 6, **characterised in that** the hole (3; 103) has a circular cross-section on a level vertical to the central axis (L).

8. Body (1; 101) according to one of the claims 1 to 7, **characterised in that** the rim (12; 112) and/or the projection (11; 111) are circular elements, the central axes of which fall on the central axis (L) of the body.

9. Body (1; 101) according to one of the claims 1 to 8, **characterised in that** the rim (12; 112) has an end surface that surrounds the hole (3; 103) and is arranged on a level vertical to the central axis (L) and/or **in that** the projection (11; 111) comprises a surface that surrounds the hole (3; 103) and is arranged on a level vertical to the central axis (L).

10. System with a deformable body (1; 101) with a hole (3; 103), which is suitable for receiving an anti-creep ring (2; 102) and a fitting (8; 108), wherein the hole (3; 103) has a central axis (L) and the hole (L) is delimited by the deformable material that forms the deformable body (1; 101), with
- a deformable, protruding rim (12; 112), which surrounds the hole (3; 103) and protrudes in the direction of the central axis (L),
- a projection (11; 111) that surrounds the hole (3; 103) and is distanced from the protruding rim (12; 112) in a direction vertical to the central axis (L), wherein the rim (12; 112) protrudes over the projection (11; 111) in the direction of the central axis (L),
and a anti-creep ring (2, 102),
wherein the anti-creep ring (2; 102) has a continuation (2'; 102') that extends from the rim (12; 112) in the direction of the projection (11; 111) and the anti-creep ring (2; 102) has a tubular part (10; 110) that is received by the hole (3; 103), wherein the continuation (2'; 102') extends from the tubular part (10; 110),
**characterised in that** the rim (12; 112) is in contact with the continuation (2'; 102') and a recess (13; 113) is envisaged between the rim (12; 112) and the projection (11; 111), so that at least a part of the rim (12; 112) can be deformed into the recess (13,113) or onto the recess (13,113) or into a position in which it floats above the recess (13,113).

11. System according to claim 10, **characterised in that** the hole (3; 103) extends through the deformable body (1; 101) from an end of the deformable body (1; 101) receiving the anti-creep ring (2; 102) to a distal end of the deformable body (1; 101), wherein the deformable material that surrounds the hole (3; 103) of the deformable body (1; 101) in the area of the end of the deformable body (1; 101) receiving the anti-creep ring (2; 102), which is softer than the material at some points of the anti-creep ring (2; 102), wherein the continuation (2'; 102') extends from the tubular part (10; 110) in a radial direction, wherein the continuation (2'; 102') is designed as a single piece with the tubular part (10; 110) from a material that forms an arched shape as a transition from the tubular part (10; 110) to the continuation (2'; 102'), wherein the bendable material of the anti-creep ring (2; 102) is more rigid in reaction to a force acting in the direction of the central axis (L) than the material of the deformable body (1; 101) that surrounds the hole (3; 103) of the deformable body (1; 101) in the area of the end of the deformable body (1; 101) surrounding the anti-creep ring (2; 102) in reaction to a force acting in the direction of the central axis (L).

12. System according to claim 10, wherein the deformable body is further **characterised in that** a recess (13; 113) is envisaged between the rim (12; 112) and the projection (11; 111), so that at least a part of the rim (12; 112) can be deformed into the recess (13,113) or onto the recess (13,113) or into a position in which it floats above the recess (13,113)
or **in that** the deformable body is a body according to one of the claims 1 to 9.

13. System according to one of the claims 10 to 12, **characterised in that** the anti-creep ring (2; 102) is formed of metal.

14. System according to one of the claims 10 to 13, **characterised by** a fitting (8; 108), which extends through the anti-creep ring (2; 102) and the hole (3; 103).

15. System according to claim 14, where dependent on claim 10, **characterised by**
- a support element (6; 106), which has a hole (7; 107), wherein the deformable body (1; 101) is arranged on the support element (6; 106) and the fitting (8; 108) extends through the anti-creep ring (2; 102), the hole (3; 103) in the deformable body (1; 101) and the hole (7; 107) in the support element (6; 106), and is provided by means of screwing the fitting (8; 108) into a thread on the support element (6; 106) which is provided by means of the hole (7; 107) of the support element (6; 106), or into a thread of a nut (9; 109), which is arranged at the distal end of the support element (6; 106),
and wherein
- the end of the tubular part (10; 110) of the anti-creep ring (2; 102) that faces the support element (6; 106) is arranged inside the hole (3; 103) of the deformable body (1; 101) and has a distance to the support element (6; 106) in a first arrangement condition of the system when the fitting (8; 108) is not, or is screwed into the thread only insubstantially,
and wherein
- the end of the tubular part (10; 110) of the anti-creep ring (2; 102) facing the support element (6; 106) is in contact with the support element (6; 106) in a second arrangement condition of the system when the fitting (8; 108) is screwed further into the thread and the deformable material surrounding the hole (3; 103) of the deformable body (1; 101) has been compressed in the area of the end of the deformable body (1; 101) receiving the anti-creep ring (2; 102).

16. System according to claim 15, **characterised in that** the continuation (2'; 102') of the anti-creep ring (2; 102) does not contact the projection (11; 111) in the second arrangement condition.

## Revendications

1. Corps malléable (1; 101) avec un trou (3; 103), qui est adapté pour réceptionner une bague anti-fluage (2; 102) et une fixation (8; 108), le trou (3; 103) ayant un axe central (L) et le trou (L) étant limité par le matériau malléable, qui forme le corps malléable (1; 101), avec
- une couronne (12; 112) saillante déformable, qui entoure le trou (3; 103) et fait saillie dans la direction de l'axe central (L),
- une saillie (11; 111), qui entoure le trou (3; 103) et est espacée de la couronne (12; 112) saillante dans une direction perpendiculaire à l'axe central (L), la couronne (12; 112) dépassant la saillie (11; 111) dans la direction de l'axe central (L),
**caractérisé en ce qu'**un évidement (13; 113) est prévu entre la couronne (12; 112) saillante et la saillie (11; 111) de sorte qu'au moins la pointe de la couronne (12; 112) puisse être déformée dans l'évidement (13, 113) ou sur l'évidement (13, 113) vers ou dans une position dans laquelle elle flotte au-dessus de l'évidement (13, 113).

2. Corps (1; 101) selon la revendication 1, **caractérisé en ce que** la couronne (12; 112) présente une section transversale se rétrécissant dans le plan qui contient l'axe central (L).

3. Corps (1; 101) selon l'une des revendications 1 ou 2, **caractérisé en ce que** la couronne (12; 112) présente une section transversale asymétrique dans le plan qui contient l'axe central (L).

4. Corps (1; 101) selon l'une des revendications 1 à 3, **caractérisé en ce que** la saillie (11; 111) forme une autre couronne (14; 114).

5. Corps (1; 101) selon l'une des revendications 1 à 4, **caractérisé en ce que** la couronne (12; 112) et la saillie (11; 111) sont formées intégralement avec le corps (1; 101).

6. Corps (1; 101) selon l'une des revendications 1 à 5, **caractérisé en ce que** la saillie (11; 111) est bien plus espacée de l'axe central (L) que la couronne (12; 112).

7. Corps (1; 101) selon l'une des revendications 1 ou 6, **caractérisé en ce que** le trou (3; 103) présente une section transversale circulaire dans un plan perpendiculaire à l'axe central (L).

8. Corps (1; 101) selon l'une des revendications 1 à 7, **caractérisé en ce que** la couronne (12; 112) et/ou la saillie (11; 111) sont des éléments circulaires dont les axes centraux coïncident avec l'axe central (L) du corps.

9. Corps (1; 101) selon l'une des revendications 1 à 8, **caractérisé en ce que** la couronne (12; 112) présente une surface d'extrémité qui entoure le trou (3; 103) et est disposée dans un plan perpendiculairement à l'axe central (L) et/ou **en ce que** la saillie (11; 111) comprend une surface qui entoure le trou (3; 103) et est disposée dans un plan perpendiculairement à l'axe central (L).

10. Système avec un corps malléable (1; 101) avec un trou (3; 103), qui est adapté pour réceptionner une bague anti-fluage (2; 102) et une fixation (8; 108), le trou (3; 103) ayant un axe central (L) et le trou (L) étant limité par le matériau malléable, qui forme le corps malléable (1; 101), avec
- une couronne (12; 112) saillante déformable, qui entoure le trou (3; 103) et fait saillie dans la direction de l'axe central (L),
- une saillie (11; 111), qui entoure le trou (3; 103) et est espacée de la couronne saillante (12; 112) dans une direction perpendiculaire à l'axe central (L), la couronne (12; 112) dépassant la saillie (11; 111) dans la direction de l'axe central (L)
et une bague anti-fluage (2; 102),
la bague anti-fluage (2; 102) présentant une extension (2'; 102') qui s'étend de la couronne (12; 112) vers la saillie (11; 111) et la bague anti-fluage (2; 102) présentant un élément tubulaire (10; 110), qui est réceptionné par le trou (3; 103), l'extension (2'; 102') s'étendant de l'élément tubulaire (10; 110),
**caractérisé en ce que** la couronne (12; 112) est en contact avec l'extension (2'; 102') et **en ce qu'**un évidement (13; 113) est prévu entre la couronne (12; 112) saillante et la saillie (11; 111) de sorte qu'au moins une partie de la couronne (12; 112) puisse être déformée dans l'évidement (13, 113) ou sur l'évidement (13, 113) vers ou dans une position dans laquelle elle flotte au-dessus de l'évidement (13, 113).

11. Système selon la revendication 10, **caractérisé en ce que** le trou (3; 103) s'étend d'une extrémité du corps malléable (1; 101) réceptionnant la bague anti-fluage (2; 102) par le corps malléable (1; 101) vers une extrémité distale du corps malléable (1; 101), le matériau malléable, entourant le trou (3; 103) du corps malléable (1; 101) dans la zone de l'extrémité du corps malléable (1; 101) réceptionnant la bague anti-fluage (2; 102), est plus mou que le matériau à différents points de la bague anti-fluage (2; 102), l'extension (2'; 102') s'étendant de l'élément tubulaire (10; 110) dans une direction radiale, l'extension (2'; 102') étant dotée d'une seule pièce de l'élément tubulaire (10; 110) dans un matériau, qui est bombé formant une jonction de l'élément tubulaire (10; 110) à l'extension (2'; 102'), le matériau flexible de la bague anti-fluage (2; 102) étant plus rigide, en réponse à une force qui agit dans la direction de l'axe central (L), que le matériau du corps malléable (1; 101), qui entoure le trou (3; 103) du corps malléable (1; 101) dans la zone de l'extrémité du corps malléable (1; 101) réceptionnant la bague anti-fluage (2; 102) en réponse à une force qui agit dans la direction de l'axe central (L).

12. Système selon la revendication 10, le corps malléable étant aussi **caractérisé en ce qu'**un évidement (13; 113) est prévu entre la couronne (12; 112) saillante et la saillie (11; 111) de sorte qu'au moins une partie de la couronne (12; 112) puisse être déformée dans l'évidement (13; 113) ou sur l'évidement (13, 113) vers ou dans une position dans laquelle elle flotte au-dessus de l'évidement (13; 113)
ou **en ce que** le corps malléable est un corps selon l'une des revendications 1 à 9.

13. Système selon l'une des revendications 10 à 12, **caractérisé en ce que** la bague anti-fluage (2; 102) est formée à partir d'un métal.

14. Système selon l'une des revendications 10 à 13, **caractérisé par** une fixation (8; 108) qui s'étend par la bague anti-fluage (2; 102) et le trou (3; 103).

15. Système selon la revendication 14, dans la mesure où dépendante de la revendication 10, **caractérisé par**
- un élément de support (6; 106), qui présente un trou (7; 107), le corps malléable (1; 101) étant disposé sur l'élément de support (6; 106) et la fixation (8; 108) s'étendant par la bague anti-fluage (2; 102), le trou (3; 103) dans le corps malléable (1; 101) et le trou (7; 107) dans l'élément de support (6; 106), et étant vissé sur l'élément de support (6; 106) au moyen de vis de la fixation (8; 108) dans un filetage, qui est possible par le trou (7; 107) de l'élément de support (6; 106) ou dans un filetage d'un écrou (9; 109), qui est disposé à l'extrémité distale de l'élément de support (6; 106),
et
- l'extrémité de l'élément tubulaire (10; 110) de la bague anti-fluage (2; 102), laquelle est tournée vers l'élément de support (6; 106), étant disposée à l'intérieur du trou (3; 103) du corps malléable (1; 101) et présentant une distance par rapport à l'élément de support (6; 106) dans un premier état de disposition du système lorsque la fixation (8 ; 108) n'est pas vissée ou que légèrement dans le filetage,
et
- l'extrémité de l'élément tubulaire (10; 110) de la bague anti-fluage (2; 102), laquelle est tournée vers l'élément de support (6; 106), étant en contact avec l'élément de support (6; 106) dans un second état de disposition du système lorsque la fixation (8 ; 108) est davantage vissée dans le filetage et le matériau malléable, qui entoure le trou (3; 103) du corps malléable (1; 101) dans la zone de l'extrémité du corps malléable (1;101) réceptionnant la bague anti-fluage (2; 102), a été compressé.

16. Système selon la revendication 15, **caractérisé en ce que** l'extension (2'; 102') de la bague anti-fluage (2; 102) n'est pas en contact avec la saillie (11; 111) dans le second état de disposition.
